# EUROPEAN PATENT APPLICATION

(11) **EP 3 984 622 A1**
(43) Date of publication of application: **20.04.2022**
(21) Application number: 21203480.5
(22) Date of filing: 19.10.2021
(51) Int. Cl.: B01D 53/58, B01D 53/78, B01D 53/73, B01D 61/36, B01D 61/44, C02F 1/469, C02F 101/16, C02F 103/18

(54) **PROCESS FOR ACID WASHING OF A GAS COMPRISING AMMONIA**

(30) Priority: 19.10.2020 NL 2026702
(71) Applicant: Lenntech B.V., 2645 EG Delfgauw (NL)
(72) Inventor: van LINDEN, Niels, 3136 HG Vlaardingen (NL); van LENNEP, David Emile, 2645 EG Delfgauw (NL)
(74) Representative: Cramwinckel, Michiel

(57) **Abstract**

The invention is directed to a process for acid washing of a gas comprising ammonia by performing the following steps. (a) contacting the gas with an acid aqueous solution comprising an aliphatic carboxylic acid resulting in a treated gas and a loaded aqueous solution comprising an ammonium salt of the aliphatic carboxylic acid. (b) subjecting the loaded aqueous solution to an electrodialysis process, in which electrodialysis an aqueous solution is obtained comprising the aliphatic carboxylic acid and an aqueous solution comprising ammonium hydroxide. (c) reusing part or all of the aqueous solution comprising the aliphatic carboxylic acid obtained in step (b) in step (a).

## Description

The invention is directed to a process for acid washing of a gas comprising ammonia. The process involves the following steps: (a) contacting the gas with an acid aqueous solution a treated gas and a loaded aqueous solution comprising an ammonium salt of the acid; (b) subjecting the loaded aqueous solution to an electrodialysis process, in which electrodialysis an aqueous solution is obtained comprising the acid and an aqueous solution comprising ammonium hydroxide and (c) reusing part or all of the aqueous solution comprising the acid obtained in step (b) in step (a).

WO19156551 describes a process to remove ammonia from air as discharged from a manure cellar by gas scrubbing. The gas scrubber is positioned above the manure cellar and consists of an upwardly positioned air scrubber filter screen through which an acid liquid flows downwards and the air flows in a perpendicular direction through the filter screen. This results in contact between the acidic liquid and ammonia resulting in that ammonia is absorbed in the liquid and the air is cleaned. The acidic liquid is an aqueous solution of sulfuric acid. A disadvantage is that the scrubbing process requires fresh aqueous solution of sulfuric acid. Further the resulting liquid comprises of ammonium sulphate which has to be disposed of.

WO2006/061082 describes two variants of the process. In one variant an aqueous solution of ammoniumsulphate is formed in a gas scrubber when an ammonia containing gas is contacted with an aqueous sulfuric acid solution. This aqueous solution of ammoniumsulphate is fed to an electrodialysis system. In the electrodialysis system sulphate ions are separated from ammonium ions via a membrane to a neighbouring chamber under the influence of an applied voltage. In the second embodiment a solution of ammoniumnitrate is formed by scrubbing at a pH of between 0 and 2 of an ammonia containing gas with an aqueous solution of nitric acid. The solution of ammoniumnitrate is fed to a three-chamber cell consisting of an anion-exchange membrane (AEM), a cation exchange membrane (CEM) and a bipolar membrane (BPM) between a cathode and an anode. The solution of ammoniumnitrate is supplied to a chamber between the anion-exchange membrane (AEM) and the cation exchange membrane (CEM) wherein nitrate ions pass the anion-exchange membrane (AEM) to form nitric acid and ammonium ions pass the cation exchange membrane (CEM) to form an ammonium hydroxide solution. Nitric acid may be used for scrubbing the ammonia containing gas. Ammonia is recovered from the ammonium hydroxide solution with the aid of steam.

A disadvantage of these prior art processes is that it makes use of strong acids requiring special measures with respect to the material of the equipment and special measures for avoiding unwanted emissions.

An object of the present invention is to provide a process which does not have one or more of the disadvantages of the prior art.

This is achieved by the following process. Process for acid washing of a gas comprising ammonia by performing the following steps
(a) contacting the gas with an acid aqueous solution comprising an aliphatic carboxylic acid resulting in a treated gas and a loaded aqueous solution comprising an ammonium salt of the aliphatic carboxylic acid, and
(b) subjecting the loaded aqueous solution to an electrodialysis process, in which electrodialysis an aqueous solution is obtained comprising the aliphatic carboxylic acid and an aqueous solution comprising ammonium hydroxide and
(c) reusing part or all of the aqueous solution comprising the aliphatic carboxylic acid obtained in step (b) in step (a).

Applicants have found that the process may be performed using an aliphatic carboxylic acid instead of the strong acids. This process does not have the disadvantages related to the use of strong acids.

The gas comprising ammonia may be air as discharged from a manure cellar as for example described in the earlier referred to WO19156551. Further the gas may be an ammonia rich air stream obtained in an air stripping process of an alkali treated, eg caustic treated, aqueous solution rich in total ammonia nitrogen (TAN). In general any air wherein ammonia is the reaction product of urea as catalysed by manure components from livestock may be treated by this process. The gas comprising ammonia may also be gasses obtained when ammonia leaks from refrigerator equipment. Another gas comprising ammonia may be the inert gas stream obtained in a high pressure scrubber of an urea plant employing the Stamicarbon CO₂ stripping process as for example described in WO03099721. The gas comprising ammonia may also further comprise synthesis gas, carbon dioxide or a methane comprising gas.

The aliphatic carboxylic acid may be monoprotic, diprotic or even triprotic. The aliphatic carboxylic acid may be a saturated or non-saturated aliphatic carboxylic acid, preferably a saturated aliphatic carboxylic acid. Preferably the aliphatic carboxylic acid has 1 to 8 carbon atoms. Examples of the aliphatic carboxylic acids are formic acid, acetic acid, propanoic acid, butyric acid, valerianic acid, caproic acid, enanthic acid, caprylic acid, pelargonic acid, capric acid, crotonic acid, isocrotonic acid, sorbic acid, obtusilic acid, caproleic acid, adipic acid, pimelic acid, suberic acid, azelaic acid, sebacic acid, citraconic acid, mesaconic acid, methylene succinic acid, allyl malonic acid, isopropylidene succinic acid or 2,4-hexadienedioic acid. The aliphatic carboxylic acid may also be a mixture of different aliphatic carboxylic acids An example of such a mixture are the so-called volatile fatty acids, including acetic acid, propanoic acid, butyric acid, lactic acid, valeric acid and succinic acid as derived from intestinal microbial fermentation of indigestible foods. Such a mixture may be isolated from manure and used as the aliphatic carboxylic acid. Preferably the aliphatic acid is citric acid. One advantage of citric acid is that it has a low vapour pressure at ambient conditions. Thus reducing emission of the acid into the environment. Further any citric acid gas which is emitted into the environment has a nice smell.

Step (a) may be performed by well-known gas-liquid contacting processes also referred to as absorption processes. Such a process is typically performed in an absorption or contacting column where gas and liquid flow counter-currently. Suitably step (a) is performed in a vertical column wherein continuously the gas comprising ammonia is fed to the column at a lower position of the column and the acid aqueous solution comprising an aliphatic carboxylic acid is continuously fed to a higher position of the column such that a substantially upward flowing gaseous stream contacts a substantially downwards flowing liquid stream. The column may be provided with internals to enhance the gas-liquid contacting. The column is further provided with an outlet for the loaded aqueous solution comprising an ammonium salt of the aliphatic carboxylic acid at its lower end and an outlet for treated gas at its upper end.

An even more preferred gas-liquid contacting process is wherein the gas comprising ammonia passes an upwardly positioned gas scrubber filter screen through which the acid aqueous solution comprising an aliphatic carboxylic acid flows downwards and the air flows in a perpendicular direction through the filter screen. An example of such a process is described in the earlier referred to WO19156551. The pressure drop for the gas is very low while a sufficient amount of ammonia is absorbed by the acid aqueous solution comprising an aliphatic carboxylic acid. Such an embodiment may result in that some of the acid evaporates into the gas. It is for such an application that citric acid as the aliphatic carboxylic acid is preferred for the earlier mentioned advantages.

The loaded aqueous solution comprising an ammonium salt of the aliphatic carboxylic acid may be filtered to separate any solids like for example dirt, dust, manure or precipitated salts from the aqueous solution before subjecting the aqueous solution to the electrodialysis process of step (b).

Step (b) may be performed in a three-chamber electrodialysis system comprising a stack of repeating units comprising an anion-exchange membrane (AEM), a cation exchange membrane (CEM) and bipolar membrane (BPM) between a cathode and an anode. Such a three-chamber electrodialysis system is for example described in the earlier referred WO2006/061082. For the anion-exchange membrane (AEM) it is preferred to use membranes which allow passage of the carboxylate ion of the aliphatic carboxylic acid. An example of a possible acid is acetic acid.

For the larger aliphatic carboxylic acids, suitably having between 4 and 8 carbon atoms, such as the preferred citric acid it is preferred to perform the process in a two chamber electrodialysis system comprising a stack of alternating cation exchange membranes (CEM) and bipolar membranes (BPM) between a cathode and an anode resulting in alternating first and second chambers as present between an anode and a cathode. The stack may comprise of between 1 and 200 cells, whereon one cell consists of a pair of a first and second chamber. To the first chambers of the stack the loaded aqueous solution is fed and from the first chamber the aqueous solution comprising the aliphatic carboxylic acid is discharged. This obtained aqueous solution comprising the aliphatic carboxylic acid is used partly or totally in step (a) as the acid aqueous solution. To the second chambers of the stack an aqueous solution is fed and from the second chambers of the stack the aqueous solution comprising ammonium hydroxide is discharged. The aqueous as fed to the second chambers of the stack may be a recycle stream of the aqueous solution comprising ammonium hydroxide as obtained in the second chambers. Preferably such a recycle is avoided or minimised and fresh aqueous solution is fed to the second chambers. In this process protons (as H+) are supplied from the bipolar membrane (BPM) of the first chamber and to the ammonium hydroxide solution hydroxyl ions (OH-) are supplied from the bipolar membrane (BPM) of the second chamber to balance the valence of the electrodialysis process.

The loaded aqueous solution and the obtained aqueous solution comprising the C1-C8 saturated aliphatic acid may be supplied and obtained in a once through process wherein the length of the chambers is sufficient to achieve the required separation. It may also be advantageous, especially in lower volume applications, to recycle the loaded aqueous solution and the obtained aqueous solution comprising the C1-C8 saturated aliphatic acid over the first chambers in a batch process.

The aqueous solution as fed to the second chambers may comprise a salt, which helps to lower the electrical resistance of the stack and therefore the energy consumption. For example, sodium chloride can be added. However, this may be disadvantageous because it could negatively affect the quality of the obtained ammonium hydroxide solution. This disadvantage is less when ammonia is isolated from the aqueous solution comprising ammonium hydroxide as a gas as will be described below. In this manner the ammonia will be separated from this added salt. Another option is to recirculate the aqueous solution comprising ammonium hydroxide optionally after some of the ammonia is isolated as a gas. This option may negatively affect the electrodialysis efficiency, because uncharged and dissolved ammonia gas may diffuse from the second chamber to the first chamber. For this reason it is preferred to perform the aqueous solution as fed to the second chambers of the stack as a once through process.

The cation exchange membranes (CEM) and bipolar membranes (BPM) of the two chamber electrodialysis system may be those known to the skilled person. Suitable cationic exchange membranes are commercially available from manufacturers such as Suez Water Technologies, Astom (e.g., NEOSEPTA), Fumatech, Allied Corporation, Tokuyama Soda, and WSI Technologies. Suitable bipolar membranes are commercially available from manufacturers such as Suez Water Technologies, Astom (e.g., NEOSEPTA), Fumatech, Allied Corporation, Tokuyama Soda, and WSI Technologies.

Step (b) may be performed as a batch process, semi-batch process or continuous process.

The ammonium hydroxide solution as obtained in step (b) may find applications as feedstock in for example non-agricultural processes such as a nutrient for microbial protein production, absorption fluid for CO₂ absorption processes and for increasing the pH in an aqueous solution. This fraction may be used to prepare a fertiliser by addition with sulfuric acid and/or nitric acid to obtain an aqueous solution of ammonium sulphate or ammonium nitrate. This aqueous solution may be used as a liquid fertiliser.

Suitably ammonia is separated from all or part of the ammonium hydroxide solution. Ammonia may be separated from the ammonium hydroxide solution by various methods known to the skilled person, such as vacuum stripping, steam stripping and membrane degassing. Suitably the ammonia is isolated from the ammonium hydroxide by means of a vacuum membrane separation wherein a mixture of ammonia and water vapour is obtained. An advantage of such a separation is that the molar ratio of ammonia to water of the thus separated ammonia-water vapour will be higher than the molar ratio of ammonia to water of the ammonium hydroxide solution. This makes the ammonia suited for various applications as described below.

The thus isolated ammonia may be combusted with air to nitrogen gas and water. For example the ammonia may be combusted in a gas turbine, optionally in admixture with natural gas or biogas. This biogas may be methane comprising gas obtained in a fermentation process of life stock manure. This fermentation step may be performed at the same location as the process according to the invention wherein the gas comprising ammonia is a product of urea as catalysed by manure components from livestock. Suitably the mixture of ammonia and water vapour is used as a feedstock for a fuel cell to generate electricity as for example described in WO2019/151855. The electricity is suitably used as a power source for driving the separation means of step (b) and/or for the vacuum membrane separation.

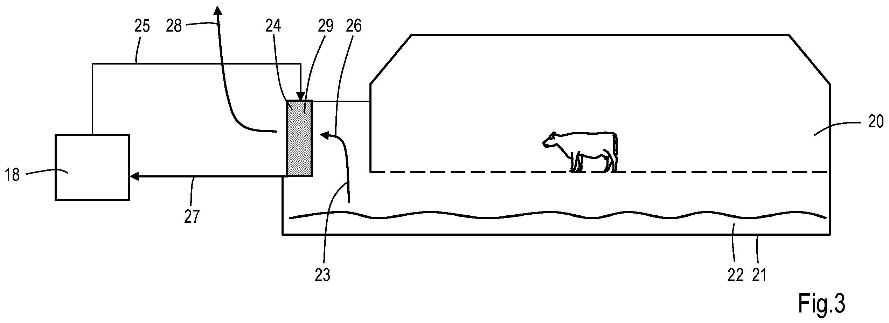

The ammonia-water vapour as obtained may also be contacted with an aqueous solution of sulfuric acid and/or nitric acid to obtain an aqueous solution of ammonium sulphate or ammonium nitrate. Such a solution may find use as a fertiliser. For example for local use when the process is used in an agricultural application as for example shown in Figure 3.

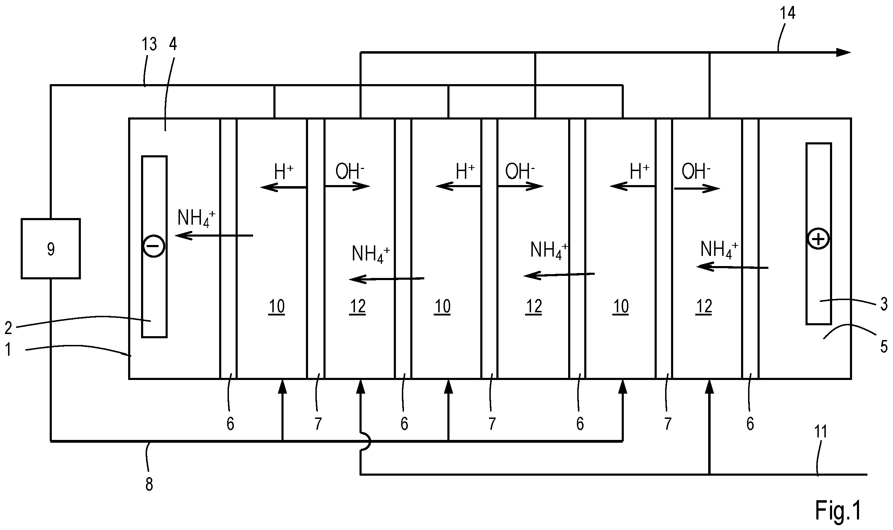

The invention is illustrated by Figures 1-6.

In Figure 1 a two chamber electrodialysis system (1) is shown. The system (1) comprising a stack of alternating cation exchange membranes (CEM)(6) and bipolar membranes (BPM)(7) between a cathode (2) and an anode (3) resulting in alternating first chambers (10) and second chambers (12). To the first chambers (10) a loaded aqueous solution (8) comprising an ammonium salt of citric acid is fed from a storage (9). From the first chambers (10) an aqueous solution comprising citric acid (13) is discharged and returned to storage (9) resulting in a recycle and a batch process. To the second chambers (12) of the stack an aqueous solution (11) is fed and from the second chambers (12) an aqueous solution (14) comprising ammonium hydroxide is discharged. Via the cation exchange membranes (CEM)(6) ammonium ions flow in the direction of the cathode whereby the larger citric acid ions remain in the first chambers (10) thereby separating the ammonium ions from citric acid ions. The charge in the chambers is compensated by the formation of protons and hydroxyl ions at the bipolar membranes (BPM)(7) as shown.

Figure 1 also shown that the cathode (2) is placed in an electrode rinse solution (4). The anode (3) is placed in an electrode rinse solution (5). The electrode rinse solutions (4) and (5) are recycled (not shown) over the electrodes such that ammonium ions picked up at the cathode may be released at the anode as shown. At the cathode the following reaction takes place:

4H₂O + 4e⁻ → 4OH⁻ and 2H₂

At the anode the following reaction takes place:

2 H₂O → 4H⁺ + O₂ + 4e⁻

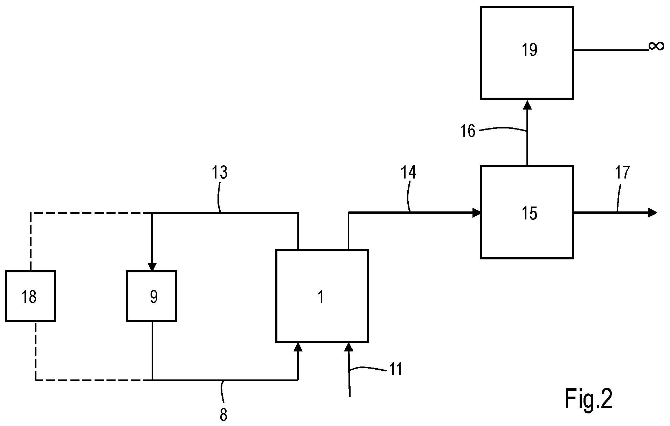

Figure 2 shows the two chamber electrodialysis system (1) of Figure 1. Ammonia is isolated from the aqueous solution (14) comprising ammonium hydroxide by means of a vacuum membrane separation (15) wherein a mixture (16) of ammonia and water vapour is obtained. This mixture (16) is used as feedstock for a fuel cell (19) to generate electricity. The aqueous solution (11) as fed to the second chambers of the stack is performed as a once through process. The loaded aqueous solution (8) and the obtained aqueous solution comprising citric acid (13) is recycled over the first chambers in a batch process via a storage vessel (9). This batch process may be continued until the level of ammonium citrate is sufficiently reduced such that the aqueous solution may be used for contacting with the gas comprising ammonia in step (a). The storage vessel (9) may then be disconnected from streams (8) and (13) to become storage vessel (18).

In Figure 3 shows a barn (20) for life stock, such as cows, positioned above manure cellar (21) filled with manure (22). From this cellar (21) gas comprising ammonia is discharged into the environment via flow path (23) and flow path (28). A gas scrubber (24) is positioned in flow path (23)/(28). The gas scrubber (24) is an upwardly positioned air scrubber filter screen (29) through which a citric acid aqueous solution (25) flows downwards and the gas comprising ammonia in flow path (23) flows in a perpendicular direction through the filter screen thereby contacting the citric acid aqueous solution (25) whereby ammonia is absorbed into the aqueous solution. The thus obtained treated gas which is poorer in ammonia than the gas comprising ammonia in flow path (23) is discharged into the environment via flow path (28). At the lower end of the air scrubber filter screen (29) a loaded aqueous solution (27) comprising of ammonia citrate is obtained which is discharged into a storage vessel (18). From storage vessel (18) the citric acid aqueous solution (25) is discharged. This circulation via storage vessel (18) continuous until the concentration of ammonia citrate relative to citric acid becomes too high to effectively absorb ammonia in gas scrubber (24). A regenerated storage vessel (9) obtained In the process of Figure 2 may then be used as storage vessel (18) and used storage vessel (18) may be regenerated in the process of Figure 2 as storage vessel (9) to become a regenerated storage vessel (9) for a next cycle. The invention is also directed to the above described barn.

The invention shall be illustrated by the following non-limiting example.

### Example 1

In this example a two chamber electrodialysis system as schematically illustrated in Figure 1 was used. The system was provided with ten cell pairs instead of the three cell pairs shown in Figure 1. The system was a bench-scale PC-Cell 64004 ED cell, consisting of a Pt/lr-MMO coated and Ti-stretched metal anode and a stainless-steel cathode. The electrode area was 64 cm2. The cation exchange and bipolar membranes, membranes and electrodes were separated by 0.5 mm thick wire mesh spacers with a void fraction of 59% made from silicon/polyethylene sulfone to form salt/acid and base (flow) cells and electrode rinse compartments. The cation exchange and bipolar membranes used were those described in "Bipolar membrane electrodialysis for energetically competitive ammonium removal and dissolved ammonia production", Niels van Linden, Giacomo L. Bandinu, David A. Vermaas, Henri Spanjers, Jules B. van Lier, Journal of Cleaner Production, Elsevier, 20 June 2020. In the example a fixed electric current of 1.28 A was applied (corresponding to 200 A/m2) and the electric potential ranged between 15 - 20 V.

The example was performed as shown in Figure 2 where a loaded aqueous solution (8) comprising an ammonium salt of citric acid was recirculated at 12 L/h (8,13) through the cell to become an aqueous solution of citric acid over time. The starting loaded aqueous solution consisted of 20 g/L tri ammonium (NH₄⁺) citrate having a volume of 0.5 L. During the example, demineralised water was supplied to the second chamber (12) of the system in a once through operation to obtain an ammonium hydroxide solution at a flow rate of 2 L/h (14).

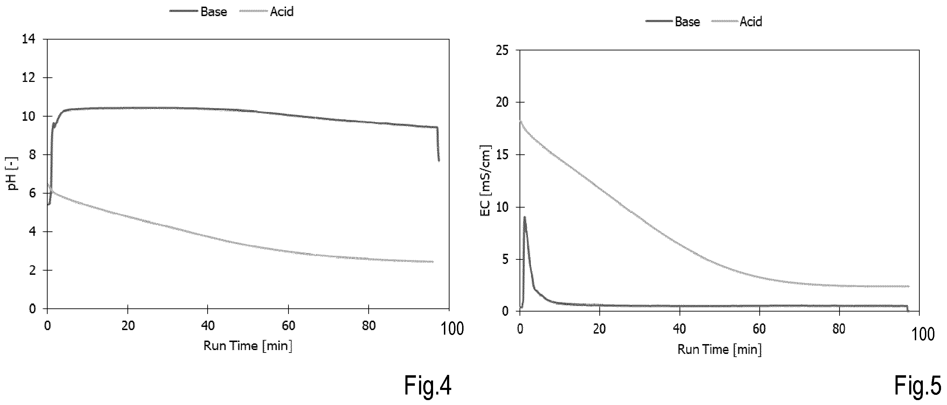

After 96 minutes, 97% of the NH₄⁺ was removed from the loaded aqueous solution (8). Table 1 shows an overview of the properties of the initial and final solutions and Figure 4 shows the evolution of the pH for the two product solutions (9,14) and Figure 5 shows the electrical conductivity (EC) of the product solutions (9,14) while performing the example. The energy consumption was 17 Wh (corresponding to 4 kWh per kg of NH₄⁺ removed). A steady production 1g/L NH₃ (as ammonium hydroxide with a corresponding pH of 10) solution was achieved.

**Table 1**

| | | Salt / acid solution (as measured in (9)) | | Base solution | |
|---|---|---|---|---|---|
| | | Initial (salt) | Final (acid) | Ingoing (base)(11) | Outgoing (base)(14) |
| Ammonia Nitrogen | g/L | 4.4 | 0.1 | 0 | 1 |
| pH | - | 7.0 | 2.5 | 7.6 | 10.0 |
| Electrical Conductivity | mS/cm | 32 | 2 | 0 | 0.5 |

### Example 2

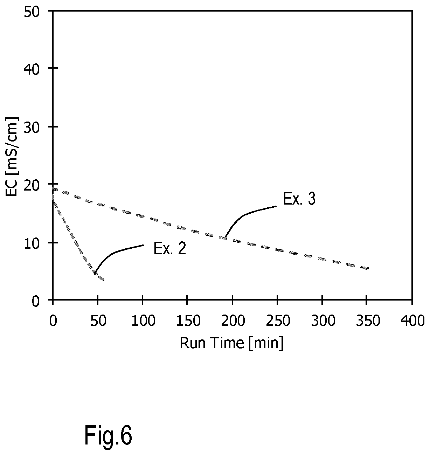

Example 1 was repeated except that the applied electric potential was 20 V. The salt conversion rate, expressed as electrical conductivity of the salt solution as a function of time was measured as is presented in Figure 6 as line Ex.2.

### Example 3

Example 2 was repeated except that a three chamber electrodialysis system was used. The three chamber system was as the two-chamber system of Example 2 to which anion-exchange membranes (AEM) are added. The membranes used were those described in the Journal article referred to in Example 1. The salt conversion rate, expressed as electrical conductivity of the salt solution as a function of time was measured as is presented in Figure 6. Based on additional ammonium concentration measurements, the salt conversion rate was 6 times higher in the two-chamber system of Example 2 as compared to the three chamber system of Example 3 as line Ex. 3.

In Example 3 citrate ions are transported from the salt to the acid solution via the . anion-exchange membranes (AEM). However, because citrate is a large, heavy and multivalent anion, the mobility is relatively low, compared to other anions. In addition, the salt conversion is limited by the mobility of the slowest ion. In the two chamber system of Example 2 the citrate ions do not pass a membrane. Only ammonium ions, which have a relatively high mobility, are transported from the salt to the base solution, while protons (H+) produced by the bipolar membranes balance the charge in the salt solution, converting it to an acid solution.

The invention is thus also especially directed to a process according to the invention wherein the electrodialysis process is performed in a two chamber electrodialysis system comprising a stack of alternating cation exchange membranes (CEM) and bipolar membranes (BPM) between a cathode and an anode resulting in alternating first and second chambers and wherein to the first chambers of the stack the loaded aqueous solution is fed, from the first chamber the aqueous solution comprising the C1-C8 saturated aliphatic acid is discharged, to the second chambers of the stack an aqueous solution is fed and from the second chambers of the stack the aqueous solution comprising ammonium hydroxide is discharged,
wherein the loaded aqueous solution and the obtained aqueous solution comprising the C1-C8 saturated aliphatic acid, preferably citric acid, is recycled over the first chambers in a batch process and
wherein the aqueous solution as fed to the second chambers of the stack is performed as a once through process.

Further preferred embodiments are described earlier in this specification.

The invention is also directed to a process to store manure in a manure cellar wherein a gas comprising ammonia is discharged from the manure cellar to the environment and wherein the gas is subjected to an acid washing according to the process of this invention before being discharged into the environment.

The invention is also directed to a livestock shed for keeping livestock animals comprising a shed building for keeping the livestock animals in an animal space having a floor which is at least partially permeable to excretory products from the livestock animals, a liquid tight manure cellar for collecting the excretory products which is situated at least partly under the floor and an air scrubber connected to the manure cellar and configured to at least partly clean ammonia comprising manure cellar gas,
wherein the air scrubber has an inlet for an aqueous solution comprising an aliphatic carboxylic acid, an outlet for a loaded aqueous solution comprising an ammonium salt of the aliphatic carboxylic acid, an inlet for ammonia comprising manure cellar air and an outlet for a treated gas, and an electrodialysis system which is
a three-chamber electrodialysis system comprising a stack of repeating units comprising an anion-exchange membrane (AEM), a cation exchange membrane (CEM) and bipolar membrane (BPM) between a cathode and an anode or
a two chamber electrodialysis system comprising a stack of alternating cation exchange membranes (CEM) and bipolar membranes (BPM) between a cathode and an anode.

Preferably the shed has an inlet for inlet for an aqueous solution comprising citric acid and the electrodialysis system is a two chamber electrodialysis system comprising a stack of alternating cation exchange membranes (CEM) and bipolar membranes (BPM) between a cathode and wherein a recycle for the loaded aqueous solution via a first chamber of the two chamber electrodialysis system is present. Further preferred embodiments are described earlier in this specification. The shed may for example be a shed as described in the earlier referred to WO19156551.

## Claims

1. Process for acid washing of a gas comprising ammonia by performing the following steps
(a) contacting the gas with an acid aqueous solution comprising an aliphatic carboxylic acid resulting in a treated gas and a loaded aqueous solution comprising an ammonium salt of the aliphatic carboxylic acid, and
(b) subjecting the loaded aqueous solution to an electrodialysis process, in which electrodialysis an aqueous solution is obtained comprising the aliphatic carboxylic acid and an aqueous solution comprising ammonium hydroxide and
(c) reusing part or all of the aqueous solution comprising the aliphatic carboxylic acid obtained in step (b) in step (a).

2. Process according to claim 1, wherein the aliphatic carboxylic acid is citric acid.

3. Process according to any one of claims 1-2, wherein the contacting in step (a) is performed by flowing the gas comprising ammonia through an upwardly positioned gas scrubber filter screen through which the acid aqueous solution comprising an aliphatic carboxylic acid flows downwardly.

4. Process according to any one of claims 1-3, wherein the electrodialysis process is performed in a two chamber electrodialysis system comprising a stack of alternating cation exchange membranes (CEM) and bipolar membranes (BPM) between a cathode and an anode resulting in alternating first and second chambers and wherein to the first chambers of the stack the loaded aqueous solution is fed, from the first chamber the aqueous solution comprising the C1-C8 saturated aliphatic acid is discharged, to the second chambers of the stack an aqueous solution is fed and from the second chambers of the stack the aqueous solution comprising ammonium hydroxide is discharged.

5. Process according to any one of claims 1-4, wherein the ammonia is isolated from the aqueous solution comprising ammonium hydroxide by means of a vacuum membrane separation wherein a mixture of ammonia and water vapour is obtained.

6. Process according to claim 5, wherein the mixture of ammonia and water vapour is used as a feedstock for a fuel cell to generate electricity.

7. Process according to claim 6, wherein the electricity is used as a power source for the electrodialysis process and/or for the vacuum membrane separation.

8. Process according to any one of claims 4-7, wherein the loaded aqueous solution and the obtained aqueous solution comprising the C1-C8 saturated aliphatic acid is recycled over the first chambers in a batch process.

9. Process according to claim 8, wherein the aqueous solution as fed to the second chambers of the stack is performed as a once through process.

10. Process according to claim 1, wherein the electrodialysis process is performed in a two chamber electrodialysis system comprising a stack of alternating cation exchange membranes (CEM) and bipolar membranes (BPM) between a cathode and an anode resulting in alternating first and second chambers and wherein to the first chambers of the stack the loaded aqueous solution is fed, from the first chamber the aqueous solution comprising the C1-C8 saturated aliphatic acid is discharged, to the second chambers of the stack an aqueous solution is fed and from the second chambers of the stack the aqueous solution comprising ammonium hydroxide is discharged, wherein the loaded aqueous solution and the obtained aqueous solution comprising the C1-C8 saturated aliphatic acid is recycled over the first chambers in a batch process and
wherein the aqueous solution as fed to the second chambers of the stack is performed as a once through process.

11. Process according to claim 10, wherein the aliphatic carboxylic acid is citric acid.

12. Process according to any one of claims 10-11, wherein the contacting in step (a) is performed by flowing the gas comprising ammonia through an upwardly positioned gas scrubber filter screen through which the acid aqueous solution comprising an aliphatic carboxylic acid flows downwardly.

13. Process to store manure in a manure cellar wherein a gas comprising ammonia is discharged from the manure cellar to the environment and wherein the gas is subjected to an acid washing according to the process of any one of claims 1-12 before being discharged into the environment.

14. Livestock shed for keeping livestock animals comprising a shed building for keeping the livestock animals in an animal space having a floor which is at least partially permeable to excretory products from the livestock animals, a liquid tight manure cellar for collecting the excretory products which is situated at least partly under the floor and an air scrubber connected to the manure cellar and configured to at least partly clean ammonia comprising manure cellar gas,
wherein the air scrubber has an inlet for an aqueous solution comprising an aliphatic carboxylic acid, an outlet for a loaded aqueous solution comprising an ammonium salt of the aliphatic carboxylic acid, an inlet for ammonia comprising manure cellar air and an outlet for a treated gas, and an electrodialysis system which is a three-chamber electrodialysis system comprising a stack of repeating units comprising an anion-exchange membrane (AEM), a cation exchange membrane (CEM) and bipolar membrane (BPM) between a cathode and an anode or
a two chamber electrodialysis system comprising a stack of alternating cation exchange membranes (CEM) and bipolar membranes (BPM) between a cathode and an anode.

15. Livestock shed according to claim 14, wherein the aliphatic carboxylic acid is citric acid and the electrodialysis system is a two chamber electrodialysis system comprising a stack of alternating cation exchange membranes (CEM) and bipolar membranes (BPM) between a cathode and wherein a recycle for the loaded aqueous solution via a first chamber of the two chamber electrodialysis system is present.
